# FASCICULE DE BREVET EUROPEEN

(11) **EP 0 742 174 B1**
(45) Date de publication et mention de la délivrance du brevet: **25.08.1999**
(21) Numéro de dépôt: 96400964.1
(22) Date de dépôt: 06.05.1996
(51) Int. Cl.: C01B 33/16, C03C 1/00

(54) **Procédé d'élaboration d'un gel de silice**
Verfahren zur Herstellung eines Kieselsäuregels
Process for producing silica gel

(30) Priorité: 11.05.1995 FR 9505586
(43) Date de publication de la demande: 13.11.1996
(73) Titulaire: ALCATEL, 75008 Paris (FR)
(72) Inventeur: Gasca, Laurent, 91400 Orsay (FR)
(74) Mandataire: Feray, Valérie

(56) Documents cités:
- EP-A- 0 129 625
- EP-A- 0 335 171
- EP-A- 0 375 548
- GB-A- 2 165 234
- PATENT ABSTRACTS OF JAPAN vol. 012, no. 349 (C-529), 20 Septembre 1988 & JP-A-63 107821 (SEIKO EPSON CORP), 12 Mai 1988,
- DATABASE WPI Section Ch, Week 9226 Derwent Publications Ltd., London, GB; Class E36, AN 92-215205 XP002010692 & SU-A-1 680 623 ( AS SIBE CATALYSIS INST) , 30 Septembre 1991
- JOURNAL OF MATERIALS SCIENCE, DEC. 1987, UK, vol. 22, no. 12, ISSN 0022-2461, pages 4407-4410, XP000574051 ADACHI T ET AL: "Preparation of monolithic silica gel and glass by the sol-gel method using N,N-dimethylformamide"

## Description

La présente invention concerne un procédé d'élaboration d'un gel de silice destiné notamment à la fabrication de préformes de fibres optiques.

Parmi les nombreux procédés connus pour la fabrication de préformes de fibres optiques, on connaît les procédés sol-gel. D'une manière générale, les procédés sol-gel permettent, à partir d'une solution ou d'une dispersion, d'obtenir un gel. Ce gel est en général séché puis densifié afin d'obtenir un corps vitreux.

Les procédés sol-gel à base de silice, qui sont mis en oeuvre pour la fabrication de préformes de fibres optiques, se divisent en deux groupes :
- ceux dont le produit de départ est un précurseur de la silice, comme par exemple un tétraalkoxyorthosilicate (Si(OR)₄, R étant un groupement alkyl), en particulier le TEOS (tétraéthoxyorthosilicate) ou le TMOS (tétraméthoxyorthosilicate),
- ceux dont le produit de départ est constitué de particules de silice SiO₂.

Une fois le gel obtenu, le traitement se poursuit par un séchage permettant d'évacuer le solvant hors du gel, puis par une densification à haute température permettant d'obtenir un corps vitreux, dont la forme finale dépend de celle du moule dans lequel le gel aura été introduit.

Un exemple de procédé du premier groupe ci-dessus est décrit dans l'article intitulé *"Preparation of monolithic silica gel and glass by the sol-gel method using N,N-dimethylformamide"* paru dans le Journal of Materials Science n°22 de 1987. Un tel procédé comporte de manière générale trois étapes principales :
- une étape de mise en solution du produit de départ par mélange de ce dernier avec un solvant (par exemple un mélange d'alcool et d'eau),
- une étape d'hydrolyse du produit de départ à l'aide d'un mélange d'eau et d'alcool, pour obtenir le tétraoxyde de silice Si(OH)₄, cette étape étant en général catalysée en phase acide de façon à accélérer la réaction d'hydrolyse,
- une étape de polycondensation du produit hydrolysé Si(OH)₄ permettant d'obtenir un gel de silice, cette étape étant catalysée, en général en phase basique, par ajout d'une très faible quantité de catalyseur.

Eventuellement, des particules de silice peuvent être ajoutées après l'étape d'hydrolyse et avant celle de polycondensation.

Il est important que, lors du séchage et de la densification, le gel ait une structure homogène, afin d'éviter des risques de fractures lors de ces traitements. Pour cela, le catalyseur de l'étape de polycondensation peut être utilisé en très faibles quantités. Malgré cela, l'homogénéité des gels obtenus n'est pas satisfaisante.

Afin d'améliorer l'homogénéité, un additif chimique de contrôle (CCA, pour Control Chemical Additive en anglais) est ajouté lors de l'une des étapes du procédé. Cet additif peut être par exemple le N,N-diméthylformamide (DMF), comme décrit dans l'article mentionné ci-dessus, ou bien le formamide, l'éthylène glycol, etc...

Cependant, l'homogénéité obtenue par ajout d'un CCA, même si elle est meilleure que celle des gels obtenus sans l'ajout de CCA, n'est pas toujours satisfaisante : on observe encore des fractures lors du séchage et de la densification.

De plus, l'élimination nécessaire du CCA lors du séchage provoque souvent la fracture du gel.

En outre, ce type d'additifs est onéreux.

Un autre problème posé par ce premier groupe de procédés réside dans le fait que le temps de prise en gel est extrêmement long, même lorsque les réactions sont catalysées, ceci du fait de l'utilisation d'une très faible quantité de catalyseur. Cela est très pénalisant pour une utilisation industrielle de ces procédés.

Un exemple de procédé du deuxième groupe est décrit dans le brevet US-4 574 063. Un tel procédé comporte les étapes suivantes :
- une étape de mise en suspension du produit de départ (particules de silice) par mélange de ce dernier avec un solvant inerte,
- une étape de gélification du produit de départ par hydrolyse des particules de silice, catalysée.

La mise en suspension dans un solvant inerte permet de réaliser une dispersion homogène des particules, ce qui doit conduire à un gel homogène.

Toutefois, ici encore, l'homogénéité n'est pas suffisante pour éviter tout risque de fracture lors des opérations de séchage et de densification, même lorsque le catalyseur est ajouté en faibles quantités.

En outre, le temps de prise en gel rend également prohibitive la mise en oeuvre de ces procédés à l'échelle industrielle.

Un but de la présente invention est donc de mettre au point un procédé d'élaboration d'un gel de silice homogène.

Un autre but de la présente invention est de mettre au point un tel procédé dans lequel le temps de prise en gel est largement réduit par rapport aux temps de prise en gel des procédés de l'art antérieur.

La présente invention propose à cet effet un procédé d'élaboration d'un gel de silice comprenant :
- une étape de mélange d'un précurseur de la silice avec un solvant afin d'obtenir une solution homogène dudit précurseur,
- une étape d'hydrolyse dudit précurseur,
- une étape de polycondensation dudit précurseur hydrolysé afin d'obtenir ledit gel, ladite étape de polycondensation étant catalysée au moyen d'un catalyseur adapté ajouté à la solution,
   caractérisé en ce que ladite étape de polycondensation comporte deux opérations séparées :
- une opération de dispersion dudit catalyseur dans la solution contenant ledit précurseur hydrolysé,
- une opération de catalyse de la réaction de polycondensation.

La présente invention propose également un procédé d'élaboration d'un gel de silice comprenant :
- une étape de dispersion de particules de silice dans un solvant afin d'obtenir une suspension homogène,
- une étape de gélification de ladite suspension afin d'obtenir ledit gel, ladite étape de gélification étant catalysée au moyen d'un catalyseur adapté ajouté à la suspension, caractérisé en ce que ladite étape de gélification comporte deux opérations séparées :
- une opération de dispersion dudit catalyseur dans ladite suspension,
- une opération de catalyse de la réaction de gélification.

Dans les deux types de procédés, la dispersion du catalyseur peut être réalisée après refroidissement du milieu réactionnel à une température par exemple inférieure à -15°C, l'opération de catalyse étant alors réalisée à une température supérieure à 20°C

Grâce à l'invention, la réaction de polycondensation ou de gélification selon le cas est ralentie uniquement pendant l'opération où une vitesse de réaction chimique trop importante est source d'inhomogénéité, c'est-à-dire pendant l'opération d'ajout du catalyseur.

Lors de l'ajout du catalyseur dans les procédés de l'art antérieur, la réaction est immédiate, alors que le catalyseur peut ne pas être réparti de manière homogène dans toute la solution ou la suspension. Ceci conduit à une polycondensation ou à une gélification non uniforme, qui est la cause des inhomogénéités observées, c'est-à-dire de l'existence de points de la structure plus solides que d'autres, le catalyseur ayant agi à un endroit donné plus qu'à un autre.

La dispersion du catalyseur dans le milieu réactionnel peut être effectuée, selon l'invention, de manière homogène avant que ne débute la réaction de catalyse elle-même. En séparant les opérations de dispersion du catalyseur et de catalyse proprement dite, on obtient l'homogénéité souhaitée.

Grâce à l'invention, on obtient des gels ayant une structure suffisamment homogène.

De plus, les temps de prise en gel sont nettement réduits (d'un facteur 10 environ), notamment du fait qu'il n'est plus nécessaire d'utiliser de très faibles quantités de catalyseur.

Enfin, l'utilisation dans le premier groupe de procédés d'un additif onéreux n'est plus nécessaire.

D'autres caractéristiques et avantages de la présente invention apparaîtront dans la description suivante d'exemples de mise en oeuvre des procédés selon l'invention.

### Exemple 1 : Elaboration d'un gel de silice à partir d'un précurseur de la silice

Etape 1 -On prépare une solution P du précurseur en mélangeant :
   - 111 ml de TEOS
   - 116 ml d'éthanol
Etape 2 -On prépare une solution acide A en mélangeant :
   - 72 ml d'eau
   - 40 µl d'acide chlorhydrique HCl (catalyseur acide)
   - 91 ml d'éthanol
Etape 3 -On prépare une solution basique B en mélangeant :
   - 61 ml d'eau
   - 0,5 ml d'ammoniaque NH₄OH (catalyseur basique)
   - 78 ml d'éthanol
   La solution B est amenée à la température de -15°C.
Etape 4 -L'hydrolyse du TEOS est obtenue en ajoutant 61 ml de la solution acide A à la solution P. La solution ainsi obtenue est placée dans un réacteur refroidi à - 15°C.
Etape 5 -Dispersion du catalyseur basique : on ajoute à la solution refroidie de l'étape 4 10 ml de la solution B refroidie.
Etape 6 (Catalyse) -La solution obtenue à l'étape 5 est versée dans un ou plusieurs moules hermétiques, et ces moules sont placés dans une étuve à 60°C.
   Les étapes 5 et 6 constituent l'étape de polycondensation du TEOS. A l'issue de l'étape 6, on obtient un gel de silice homogène.

### Exemple 2 : Elaboration d'un gel de silice à partir de particules de silice

Etape 1 -On prépare une dispersion D de suies de silice en mélangeant :
   - 100 g de suies de silice préalablement calcinés à 900°C
   - 100 g de chloroforme
   La dispersion D est placée dans un réacteur refroidi à -15°C.
Etape 2 -On prépare une solution basique B' en mélangeant :
   - 3 ml d'eau
   - 1 ml d'ammoniaque NH₄OH 28% (catalyseur basique)
   - 78 ml d'éthanol
Etape 3 -Dispersion du catalyseur basique : on ajoute 20 ml de la solution B' refroidie à la dispersion D refroidie de l'étape 1
Etape 4 -La dispersion obtenue à l'étape 3 est versée dans un ou plusieurs moules hermétiques, et ces moules sont placés dans une étuve à 60°C.
   Les étapes 3 et 4 constituent l'étape de gélification. A l'issue de l'étape 4, on obtient un gel de silice homogène.

On constate que lors du séchage et de la densification des gels obtenus selon les exemples 1 et 2, la proportion de pièces fracturées est d'environ une sur dix, alors que cette même proportion est de plus d'une pièce sur trois avec les procédés des premier et deuxième groupes de l'art antérieur.

En outre, aussi bien dans le cas de l'exemple 1 que dans celui de l'exemple 2, le temps de prise en gel est réduit d'un facteur 10 par rapport au temps de prise en gel observé dans les procédés des premier et deuxième groupes de l'art antérieur.

Dans les exemples 1 et 2, la méthode utilisée pour obtenir la dispersion du catalyseur consiste à refroidir au préalable le milieu réactionnel. Toutefois, d'autres méthodes équivalentes, à la portée de l'homme de l'art, peuvent être envisagées dans ce but.

D'autre part, les températures de refroidissement indiquées ne constituent que des exemples, et les températures seront choisies en pratique au cas par cas, ce choix étant à la portée de l'homme du métier. Il en est de même pour la température à laquelle la réaction de catalyse doit se produire.

A titre préférentiel, la température de refroidissement sera inférieure à - 15°C, et celle de la catalyse supérieure à 20°C.

Les exemples 1 et 2 traitent de l'élaboration d'un gel de silice pure. Toutefois, il est possible d'ajouter lors de l'une des étapes un ou plusieurs produits de dopage afin de modifier certaines caractéristiques (viscosité, indice de réfraction, etc...) de la pièce de silice vitreuse à obtenir. Les produits adaptés susceptibles de modifier certaines des caractéristiques physiques des pièces élaborées sont bien connus de l'homme de l'art ; il s'agit par exemple du germanium, de l'aluminium, du phosphore, etc...

Enfin, on pourra remplacer tout moyen par un moyen équivalent sans sortir du cadre de la présente invention.

## Revendications

1. Procédé d'élaboration d'un gel de silice comprenant :
- une étape de mélange d'un précurseur de la silice avec un solvant afin d'obtenir une solution homogène dudit précurseur,
- une étape d'hydrolyse dudit précurseur,
- une étape de polycondensation dudit précurseur hydrolysé afin d'obtenir ledit gel, ladite étape de polycondensation étant catalysée au moyen d'un catalyseur adapté ajouté à la solution,
caractérisé en ce que ladite étape de polycondensation comporte deux opérations séparées :
- une opération de dispersion dudit catalyseur dans la solution contenant ledit précurseur hydrolysé,
- une opération de catalyse de la réaction de polycondensation.

2. Procédé d'élaboration d'un gel de silice comprenant :
- une étape de dispersion de particules de silice dans un solvant afin d'obtenir une suspension homogène,
- une étape de gélification de ladite suspension afin d'obtenir ledit gel, ladite étape de gélification étant catalysée au moyen d'un catalyseur adapté ajouté à la suspension,
caractérisé en ce que ladite étape de gélification comporte deux opérations séparées :
- une opération de dispersion dudit catalyseur dans ladite suspension,
- une opération de catalyse de la réaction de gélification.

3. Procédé selon l'une des revendications 1 ou 2 caractérisé en ce que la dispersion du catalyseur est réalisée après refroidissement du milieu réactionnel, l'opération de catalyse étant alors réalisée à une température supérieure à 20°C.

4. Procédé selon la revendication 3 caractérisé en ce que le refroidissement est effectué à une température inférieure à -15°C.

5. Procédé selon l'une des revendications 1 à 4 caractérisé en ce qu'un ou plusieurs additifs de dopage sont ajoutés lors de l'une des étapes.

## Claims

1. A method of preparing a silica gel, the method comprising:
a mixing step in which a silica precursor is mixed with a solvent to obtain a homogeneous solution of said precursor;
a hydrolysis step in which said precursor is hydrolyzed; and
a polycondensation step in which the hydrolyzed precursor is subjected to polycondensation to obtain a gel, said polycondensation step being catalyzed by means of a suitable catalyst added to the solution;
said method being characterized in that the polycondensation step comprises two separate operations:
a dispersion operation in which said catalyst is dispersed in the solution containing said hydrolyzed precursor; and
a catalysis operation in which the polycondensation reaction is catalyzed.

2. A method of preparing a silica gel, said method comprising:
a dispersion step in which particles of silica are dispersed in a solvent to obtain a homogeneous suspension;
a gelling step in which said suspension is gelled to obtain said gel, said gelling step being catalyzed by means of a suitable catalyst added to the suspension;
said method being characterized in that said gelling step comprises two separate operations:
a dispersion operation in which said catalyst is dispersed in said suspension; and
a catalysis operation in which the gelling reaction is catalyzed.

3. A method according to claim 1 or 2, characterized in that the catalyst is dispersed after cooling the reaction medium, the catalysis operation then being performed at a temperature higher than 20°C.

4. A method according to claim 3, characterized in that the cooling is performed to a temperature lower than -15°C.

5. A method according to any one of claims 1 to 4, characterized in that one or more doping additives are added during one of the steps.

## Patentansprüche

1. Verfahren zur Herstellung eines Kieselsäuregels, welches umfaßt:
- einen Verfahrensschritt, bei dem eine Vorstufe des Siliciumdioxides mit einem Lösungsmittel gemischt wird, um eine homogene Lösung der genannten Vorstufe zu erhalten,
- einen Verfahrensschritt, bei dem die genannte Vorstufe hydrolysiert wird,
- einen Verfahrensschritt, bei dem die genannte hydrolysierte Vorstufe einer Polykondensation unterliegt, um das genannte Gel zu erhalten, wobei der genannte Polykondensationsschritt mittels eines angepaßten Katalysators katalysiert wird, welcher der Lösung hinzugegeben wird,
**dadurch gekennzeichnet, daß** der genannte Polykondensationsschritt zwei getrennte Arbeitsgänge aufweist:
- ein Arbeitsgang, bei dem der genannte Katalysator in der Lösung, die die genannte hydrolysierte Vorstufe enthält, dispergiert wird,
- ein Arbeitsgang, bei dem die Polykondensationsreaktion katalysiert wird.

2. Verfahren zur Herstellung eines Kieselsäuregels, welches umfaßt:
- ein Verfahrensschritt, bei dem die Siliciumdioxid-Partikel in einem Lösungsmittel dispergiert werden, um eine homogene Suspension zu erhalten,
- ein Verfahrensschritt, bei dem die genannte Suspension geliert wird, um das genannte Gel zu erhalten, wobei der genannte Gelierschritt mittels eines angepaßten Katalysators, der zu der Suspension hinzugegeben wird, katalysiert wird,
**dadurch gekennzeichnet, daß** der genannte Gelierschritt zwei getrennte Arbeitsgänge aufweist:
- ein Arbeitsgang, bei dem der genannte Katalysator in der genannten Suspension dispergiert wird,
- ein Arbeitsgang, bei dem die Gelierreaktion katalysiert wird.

3. Verfahren nach einem der Ansprüche 1 oder 2,
**dadurch gekennzeichnet, daß** die Dispersion des Katalysators nach Abkühlung der Reaktionsumgebung erfolgt, wohingegen die Katalyse bei einer Temperatur oberhalb von 20°C erfolgt.

4. Verfahren nach Anspruch 3,
**dadurch gekennzeichnet, daß** die Abkühlung auf eine Temperatur von unterhalb von -15°C erfolgt.

5. Verfahren nach einem der Ansprüche 1 bis 4,
**dadurch gekennzeichnet, daß** einer oder mehrere Dotierzusätze während einem der Verfahrensschritte hinzugegeben werden.
